# EUROPÄISCHE PATENTANMELDUNG

(11) **EP 4 092 854 A2**
(43) Veröffentlichungstag der Anmeldung: **23.11.2022**
(21) Anmeldenummer: 22173429.6
(22) Anmeldetag: 16.05.2022
(51) Int. Cl.: H02H 3/087, H02H 9/00

(54) **ELEKTRONISCHE STROMVERTEILERANORDNUNG ZUM ABSICHERN KAPAZITIVER LASTEN**

(30) Priorität: 19.05.2021 DE 102021112935
(71) Anmelder: Lisa Dräxlmaier GmbH, 84137 Vilsbiburg (DE)
(72) Erfinder: Wortberg, Michael, 84405 Dorfen (DE)

(57) **Zusammenfassung**

Die Offenbarung betrifft eine elektronische Stromverteileranordnung (100), mit: einer elektrischen Leitung (110) zur Stromversorgung einer kapazitiven Last (170); einem ersten elektronischen Schalter (120) zur Absicherung der kapazitiven Last; einem zweiten elektronischen Schalter (130) zum Vorladen der kapazitiven Last vor einem Durchschalten des ersten elektronischen Schalters (120); einem Widerstand (160), der zu dem zweiten schaltbaren Strompfad des zweiten elektronischen Schalters (130) in Serie geschaltet ist, wobei die Serienschaltung parallel geschaltet ist zu dem ersten schaltbaren Strompfad des ersten elektronischen Schalters (120); und einer Steuerung (140). Die Steuerung ist ausgebildet, vor dem Durchschalten des ersten elektronischen Schalters (120) zur Stromversorgung der kapazitiven Last (170) den zweiten elektronischen Schalter (130) einzuschalten, um die kapazitive Last vorzuladen und den ersten elektronischen Schalter (120) erst dann durchzuschalten, wenn eine Spannung an dem Widerstand (160) einen Schwellwert erreicht.

## Beschreibung

Die Offenbarung betrifft elektronische Stromverteileranordnungen zum Absichern einer kapazitiven Last und Verfahren zum Absichern einer kapazitiven Last, zum Beispiel für die Absicherung kapazitiver Lasten in Fahrzeugen. Insbesondere betrifft die Offenbarung eine Inrush-Schaltung bzw. Einschalt-Schaltung und Steuerung für das Schalten in kapazitive Lasten.

Elektronische Stromverteiler, die beispielsweise im Automobilbereich eingesetzt werden, müssen eine große Anzahl von Lastpfaden absichern. Die elektronische Absicherung ist notwendig wegen der Sicherheits-Implikation der Versorgung. Konventionelle Sicherungen sind sehr träge und erlauben daher kein rückwirkungsfreies Trennen von Fehlern. Problematisch ist allerdings das Aufschalten von kapazitiven Lasten. Beim Aufschalten der Bordnetzspannung auf die Eingangskapazität der Lasten entstehen sehr große Inrush-Ströme. Diese können über der Schwelle der schnellen Kurzschlussabschaltung liegen. In der Konsequenz wird der MOSFET beim Schalten in die kapazitive Last sofort wieder ausgeschaltet.

Es ist eine Aufgabe der Erfindung, ein Konzept für eine zuverlässige Einschalt-Schaltung und Steuerung zu schaffen, bei dem das Einschalten der Stromversorgung stabil erfolgt. Insbesondere ist es eine Aufgabe der Erfindung, eine zuverlässige Einschalt-Schaltung und Steuerung zu schaffen, bei der es zu keinem dauerhaften Ein- und Ausschalten der Stromversorgung aufgrund eines wiederholten Ansprechens der Kurzschlussabschaltung beim Einschaltvorgang kommt.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

Die Offenbarung basiert auf der Idee, beim Aufschalten der Bordnetzspannung über einen zusätzlichen (kleinen) MOSFET ("Bypass-MOSFET") kurzzeitig (z.B. für 2ms) die kapazitive Last auf beispielsweise 2V zu laden. Nach den 2ms wird die Spannung an der Last gemessen. Ist diese größer als 2V, so liegt kein Kurzschluss der Last vor. Dann kann die schnelle Kurzschlussabschaltung des MOSFETs durch die Steuerung ausgeschaltet und der MOSFET voll durchgesteuert werden. Die Spannung an der Last steigt dann sehr schnell auf 12V.

In dieser Offenbarung werden Stromverteileranordnungen beschrieben. Eine Stromverteileranordnung ist eine Anordnung aus einem oder mehreren Stromverteilern und weiteren elektronischen Komponenten, wie z.B. einem oder mehreren elektronischen Schaltern und einer Steuerung.

Ein Stromverteiler, ist ein Gerät oder eine Anordnung, z.B. auf einer Leiterplatte, in dem Sicherungs- und Schaltelemente zur Verteilung von elektrischer Energie, vornehmlich im Bereich des Niederspannungsnetzes untergebracht sind. Er befindet sich in praktisch jedem elektrifizierten Fahrzeug oder Gebäude. Von Stromverteilern führen elektrische Leitungen entweder direkt zu den Verbrauchsstellen, zum Beispiel zu den Sensoren, dem Lüfter oder der Innenraumbeleuchtung im KFZ oder zu einer Anschlussdose für ein Haushaltsgerät, zu einer Steckdose, zu einem Beleuchtungskörper im Gebäude oder zum nächsten untergeordneten Stromverteiler.

In dieser Offenbarung werden elektronische Schalter beschrieben. Ein elektronischer Schalter, auch Analogschalter oder Halbleiterschalter genannt, ist Bestandteil einer elektronischen Schaltung, die die Funktion eines elektromechanischen Schalters realisiert. Dabei können als Schaltelemente Feldeffekttransistoren (FET), z.B. Metall-Oxid-Halbleiter FETs, und Bipolartransistoren sowie Dioden zum Einsatz kommen. Im weiteren Sinn können auch Thyristoren und Halbleiterrelais als elektronische Schalter verwendet werden.

In dieser Offenbarung werden Metall-Oxid-Halbleiter Feldeffekttransistoren beschrieben. Ein Metall-Oxid-Halbleiter-Feldeffekttransistor (MOSFET) ist eine zu den Feldeffekttransistoren mit isoliertem Gate gehörende Bauform eines Transistors, der sich durch einen Schichtstapel aus einer metallischen Gate-Elektrode, einem Halbleiter und dem dazwischen befindlichem oxidischen Dielektrikum bestimmt. Dies stellt eine Metall-Isolator-Halbleiter-Struktur dar. Die Steuerung des Stromflusses im Halbleiterbereich zwischen den beiden elektrischen Anschlüssen Drain und Source erfolgt über eine Steuerspannung (Gate-Source-Spannung) bzw. Steuerpotential (Gate-Potential) an einem dritten Anschluss, dem sogenannten Gate. Dieses ist durch ein Dielektrikum vom Halbleiter (und damit von Drain und Source) elektrisch isoliert.

Gemäß einem ersten Aspekt wird die Aufgabe gelöst durch eine elektronische Stromverteileranordnung, mit: einer elektrischen Leitung zur Stromversorgung einer kapazitiven Last; einem ersten elektronischen Schalter zur Absicherung der kapazitiven Last, wobei der erste elektronische Schalter einen ersten schaltbaren Strompfad zwischen einem ersten Lastanschluss und einem zweiten Lastanschluss des ersten elektronischen Schalters aufweist, und die elektrische Leitung an den ersten Lastanschluss des ersten elektronischen Schalters angeschlossen ist, und der zweite Lastanschluss des ersten elektronischen Schalters an eine Stromversorgung anschließbar ist, um die kapazitive Last mit Strom zu versorgen; einem zweiten elektronischen Schalter zum Vorladen der kapazitiven Last vor einem Durchschalten des ersten elektronischen Schalters, wobei der zweite elektronische Schalter einen zweiten schaltbaren Strompfad zwischen einem ersten Lastanschluss und einem zweiten Lastanschluss des zweiten elektronischen Schalters aufweist, einem Widerstand, der zu dem zweiten schaltbaren Strompfad des zweiten elektronischen Schalters in Serie geschaltet ist, wobei die Serienschaltung des Widerstands mit dem zweiten elektronischen Schalter parallel geschaltet ist zu dem ersten schaltbaren Strompfad des ersten elektronischen Schalters; und einer Steuerung zum Steuern des ersten elektronischen Schalters und des zweiten elektronischen Schalters, wobei die Steuerung ausgebildet ist, vor dem Durchschalten des ersten elektronischen Schalters zur Stromversorgung der kapazitiven Last den zweiten elektronischen Schalter einzuschalten, um die kapazitive Last vorzuladen und den ersten elektronischen Schalter erst dann durchzuschalten, wenn eine Spannung an dem Widerstand einen Schwellwert erreicht.

Eine solche elektronische Stromverteileranordnung ermöglicht ein zuverlässiges und stabiles Aufschalten der Stromversorgung. Die elektronische Stromverteileranordnung stellt eine zuverlässige Einschalt-Schaltung und Steuerung bereit, bei der es zu keinem dauerhaften Ein- und Ausschalten der Stromversorgung aufgrund eines wiederholten Ansprechens der Kurzschlussabschaltung beim Einschaltvorgang kommt. Damit wird der Stress für die Schaltungskomponenten stark reduziert und die Stromverteileranordnung arbeitet stabil und ressourcenschonend.

Gemäß einer beispielhaften Ausführungsform der elektronischen Stromverteileranordnung ist die Steuerung ausgebildet, die kapazitive Last über einen elektrischen Bypass-Pfad von der Stromversorgung über den zweiten schaltbaren Strompfad des zweiten elektronischen Schalters und den Widerstand zu der kapazitiven Last vorzuladen.

Damit wird der technische Vorteil erzielt, dass mit diesem Bypass-Pfad getestet werden kann, ob die kapazitive Last einen Ladezustand hält oder ob ein Kurzschluss vorliegt, bei dem der Ladezustand nicht gehalten werden kann. Es kann somit effizient festgestellt werden, ob ein Kurzschluss im Lastpfad vorliegt.

Gemäß einer beispielhaften Ausführungsform der elektronischen Stromverteileranordnung liegt der Schwellwert der Spannung an dem Widerstand oberhalb einer Spannung, die sich bei einem Kurzschluss der kapazitiven Last an dem Widerstand einstellt.

Damit wird der technische Vorteil erzielt, dass bei einer solchen Wahl des Schwellwertes der Spannung zuverlässig erkannt werden kann, ob ein Kurzschluss im Lastpfad vorliegt.

Gemäß einer beispielhaften Ausführungsform der elektronischen Stromverteileranordnung ist die Steuerung ausgebildet, beim Durchschalten des ersten elektronischen Schalters eine Kurzschlussabschaltung des ersten elektronischen Schalters auszuschalten.

Damit wird der technische Vorteil erzielt, dass in dem Fall, dass kein Kurzschluss vorliegt, die Kurzschlussabschaltung ausgeschaltet werden kann, um so ein hartes Aufschalten der Last zu ermöglichen und damit den Startvorgang zu beschleunigen.

Gemäß einer beispielhaften Ausführungsform der elektronischen Stromverteileranordnung ist die Kurzschlussabschaltung des ersten elektronischen Schalters in der Steuerung implementiert, und ausgebildet, den ersten elektronischen Schalter abzuschalten, wenn ein Strom durch den ersten schaltbaren Strompfad des ersten elektronischen Schalters einen Abschaltschwellwert erreicht.

Damit wird der technische Vorteil erzielt, dass die elektronische Stromverteileranordnung den entsprechenden Sicherheitsvorschriften entspricht, wonach im Kurzschlussfall die Last schnell und effizient von der Stromversorgung getrennt wird.

Gemäß einer beispielhaften Ausführungsform der elektronischen Stromverteileranordnung ist die Steuerung ausgebildet, beim Durchschalten des ersten elektronischen Schalters einen Stromfluss durch den ersten schaltbaren Strompfad zuzulassen, der oberhalb des Abschaltschwellwerts liegt.

Damit wird der technische Vorteil erzielt, dass im Falle, dass kein Kurzschluss vorliegt, die elektronische Stromverteileranordnung ein schnelles und sicheres Aufschalten der Last ermöglicht.

Gemäß einer beispielhaften Ausführungsform der elektronischen Stromverteileranordnung ist die Steuerung ausgebildet, die Spannung an dem Widerstand nach Ablauf einer vorbestimmten Zeit ab dem Einschalten des zweiten elektronischen Schalters zu erfassen.

Damit wird der technische Vorteil erzielt, dass durch den zweiten elektronischen Schalter ein Test des Vorladezustands der kapazitiven Last ermöglicht wird. Nach der vorbestimmten Zeit sollte die kapazitive Last einen spezifizierbaren Vorladezustand eingenommen haben, falls kein Kurzschluss im Lastpfad vorliegt.

Gemäß einer beispielhaften Ausführungsform der elektronischen Stromverteileranordnung ist die Steuerung ausgebildet, den ersten elektronischen Schalter im abgeschalteten Zustand zu halten, wenn die Spannung an dem Widerstand nach Ablauf der vorbestimmten Zeit unterhalb des Schwellwerts der Spannung verbleibt.

Damit wird der technische Vorteil erzielt, dass über die Spannung am Widerstand getestet werden kann, ob sich der Lastpfad im Kurzschluss befindet, nämlich durch Überprüfen der Spannung am Widerstand.

Gemäß einer beispielhaften Ausführungsform der elektronischen Stromverteileranordnung liegt der Schwellwert der Spannung unterhalb einer Aufstart-Spannung eines Spannungsreglers der kapazitiven Last.

Damit wird der technische Vorteil erzielt, dass über den Vergleich mit der Aufstart-Spannung leicht festgestellt werden kann, ob ein Kurzschluss vorliegt.

Gemäß einer beispielhaften Ausführungsform der elektronischen Stromverteileranordnung umfasst der erste elektronische Schalter und/oder der zweite elektronische Schalter einen MOSFET Transistor.

Damit wird der technische Vorteil erreicht, dass eine solche elektronische Stromverteileranordnung mit MOSFETs besonders einfach realisierbar ist, da MOSFET Transistoren Standardbauteile sind, die zu geringen Kosten verfügbar sind.

Gemäß einer beispielhaften Ausführungsform der elektronischen Stromverteileranordnung umfasst die Steuerung einen anwendungsspezifischen integrierten Schaltkreis, ASIC, insbesondere einen elektrischen Sicherungs-ASIC, eFASic.

Damit wird der technische Vorteil erreicht, dass eine Steuerung über ASICs eine schnelle Reaktionszeit aufweist und leicht zu programmieren und auch wieder umzuprogrammieren ist.

Gemäß einer beispielhaften Ausführungsform der elektronischen Stromverteileranordnung ist die Steuerung ausgebildet, ein Aufschalten einer Bordnetzspannung auf die kapazitive Last basierend auf einer Ansteuerung des ersten elektronischen Schalters und des zweiten elektronischen Schalters zu steuern.

Damit wird der technische Vorteil erreicht, dass eine solche elektronische Stromverteileranordnung effizient das wiederholte Auf- und Abschalten der Stromversorgung verhindert und damit die Last stabil aufschaltet.

Gemäß einem zweiten Aspekt wird die Aufgabe gelöst durch eine elektronische Stromverteileranordnung, mit: einer elektrischen Leitung zur Stromversorgung einer kapazitiven Last; einem elektronischen Schalter zur Absicherung der kapazitiven Last, wobei der elektronische Schalter einen schaltbaren Strompfad zwischen einem ersten Lastanschluss und einem zweiten Lastanschluss aufweist, und die elektrische Leitung an den ersten Lastanschluss angeschlossen ist, und der zweite Lastanschluss an eine Stromversorgung anschließbar ist, um die kapazitive Last mit Strom zu versorgen; und einer Steuerung zum Steuern des elektronischen Schalters, wobei die Steuerung eine Kurzschlussabschaltung aufweist, die ausgebildet ist, den elektronischen Schalter abzuschalten, wenn ein Strom durch den schaltbaren Strompfad des elektronischen Schalters einen Abschaltschwellwert erreicht und nach dem Abschalten wieder einzuschalten, und damit die kapazitive Last stufenweise aufzuladen, wobei die Steuerung ausgebildet ist, eine Spannung an der kapazitiven Last zu erfassen und den elektronischen Schalter durchzuschalten, wenn die erfasste Spannung an der kapazitiven Last einen Schwellwert erreicht.

Eine solche elektronische Stromverteileranordnung ermöglicht ein zuverlässiges und stabiles Aufschalten der Stromversorgung. Die elektronische Stromverteileranordnung stellt eine zuverlässige Einschalt-Schaltung und Steuerung bereit, bei der Stress für die Schaltungskomponenten stark reduziert wird. Gegenüber der elektronischen Stromverteileranordnung gemäß dem ersten Aspekt werden hier zusätzliche elektronische Komponenten eingespart, wie zum Beispiel der zweite elektronische Schalter und der Widerstand.

Gemäß einer beispielhaften Ausführungsform der elektronischen Stromverteileranordnung nach dem zweiten Aspekt ist die Steuerung ausgebildet ist, den elektronischen Schalter nach einer vorgegebenen Zeit nach dem Erreichen des Abschaltschwellwerts des elektronischen Schalters wieder einzuschalten.

Damit wird der technische Vorteil erreicht, dass die kapazitive Last schrittweise vorgeladen wird, um so zu testen, ob ein Kurzschluss im Lastpfad vorliegt oder nicht.

Gemäß einer beispielhaften Ausführungsform der elektronischen Stromverteileranordnung nach dem zweiten Aspekt liegt der Schwellwert der Spannung an der kapazitiven Last oberhalb einer Spannung an der kapazitiven Last, die sich bei einem Kurzschluss an der kapazitiven Last einstellt.

Damit wird der technische Vorteil erreicht, dass effizient erkannt werden kann, ob ein Kurzschluss im Lastpfad vorliegt.

Gemäß einer beispielhaften Ausführungsform der elektronischen Stromverteileranordnung nach dem zweiten Aspekt ist die Steuerung ausgebildet, beim Durchschalten des elektronischen Schalters die Kurzschlussabschaltung des elektronischen Schalters auszuschalten.

Damit wird der technische Vorteil erreicht, dass für den Fall, dass kein Kurzschluss im Lastpfad vorliegt, die Last sehr schnell aufgeschaltet, d.h. an die Stromversorgung angeschlossen, werden kann.

Gemäß einem dritten Aspekt wird die Aufgabe gelöst durch ein Verfahren zum Absichern einer kapazitiven Last, die über eine elektrische Leitung an eine elektronische Stromverteileranordnung angeschlossen ist, welche Folgendes aufweist: einen ersten elektronischen Schalter mit einem ersten schaltbaren Strompfad zwischen einem ersten Lastanschluss und einem zweiten Lastanschluss des ersten elektronischen Schalters aufweist, wobei die elektrische Leitung an den ersten Anschluss des ersten elektronischen Schalters angeschlossen ist, und wobei der zweite Anschluss des ersten elektronischen Schalters an eine Stromversorgung angeschlossen ist, um die kapazitive Last mit Strom zu versorgen; einen zweiten elektronischen Schalter mit einem zweiten schaltbaren Strompfad zwischen einem ersten Lastanschluss und einem zweiten Lastanschluss des zweiten elektronischen Schalters; einen Widerstand, der zu dem zweiten schaltbaren Strompfad des zweiten elektronischen Schalters in Serie geschaltet ist, wobei die Serienschaltung des Widerstands mit dem zweiten elektronischen Schalter parallel geschaltet ist zu dem ersten schaltbaren Strompfad des ersten elektronischen Schalters; wobei das Verfahren folgende Schritte umfasst: Einschalten des zweiten elektronischen Schalters zum Vorladen der kapazitiven Last vor einem Durchschalten des ersten elektronischen Schalters; Erfassen einer Spannung an dem Widerstand; und Durchschalten des ersten elektronischen Schalters, wenn die erfasste Spannung an dem Widerstand einen Schwellwert erreicht.

Ein solches Verfahren ermöglicht ein zuverlässiges und stabiles Aufschalten der Stromversorgung. Das Verfahren stellt eine zuverlässige Einschalt-Schaltung und Steuerung bereit, bei der es zu keinem dauerhaften Ein- und Ausschalten der Stromversorgung aufgrund eines wiederholten Ansprechens der Kurzschlussabschaltung beim Einschaltvorgang kommt. Damit wird der Stress für die Schaltungskomponenten stark reduziert und es kommt zu einem stabilen und ressourcenschonenden Betriebsablauf.

Gemäß einem vierten Aspekt wird die Aufgabe gelöst durch ein Verfahren zum Absichern einer kapazitiven Last, die über eine elektrische Leitung an eine elektronische Stromverteileranordnung angeschlossen ist, welche Folgendes aufweist: einen elektronischen Schalter mit einem schaltbaren Strompfad zwischen einem ersten Lastanschluss und einem zweiten Lastanschluss, wobei die elektrische Leitung an den ersten Lastanschluss angeschlossen ist, und wobei der zweite Lastanschluss an die Stromversorgung angeschlossen ist, um die kapazitive Last mit Strom zu versorgen; wobei das Verfahren folgende Schritte umfasst: schrittweises Abschalten des ersten elektronischen Schalters, wenn ein Strom durch den schaltbaren Strompfad des elektronischen Schalters einen Abschaltschwellwert erreicht und Wiedereinschalten des elektronischen Schalters nach dem Abschalten, um die kapazitive Last stufenweise aufzuladen; Erfassen einer Spannung an der kapazitiven Last; und Durchschalten des elektronischen Schalters, wenn die erfasste Spannung an der kapazitiven Last einen Schwellwert erreicht.

Ein solches Verfahren ermöglicht ein zuverlässiges und stabiles Aufschalten der Stromversorgung. Das Verfahren stellt eine zuverlässige Einschalt-Schaltung und Steuerung bereit, bei der Stress für die Schaltungskomponenten stark reduziert wird. Gegenüber dem Verfahren gemäß dem dritten Aspekt werden hier zusätzliche elektronische Komponenten eingespart, wie zum Beispiel der zweite elektronische Schalter und der Widerstand.

Gemäß einem fünften Aspekt der Erfindung wird die Aufgabe gelöst durch ein Computerprogramm mit einem Programmcode zum Ausführen des Verfahrens gemäß dem dritten oder vierten Aspekt auf einer Steuerung, insbesondere einer Steuerung einer elektronischen Stromverteileranordnung gemäß dem ersten oder zweiten Aspekt.

Damit wird der technische Vorteil erreicht, dass das Computerprogramm einfach auf einer Steuerung ausgeführt werden kann.

Im Folgenden wird die Erfindung anhand von Ausführungsbeispielen und den Figuren näher beschrieben. In den Figuren zeigen:
- Fig. 1: eine schematische Darstellung des Stromverlaufs beim Anschalten einer kapazitiven Last an die Bordnetzspannung mit wiederholtem Zuschalten des elektronischen Schalters;
- Fig. 2: eine schematische Darstellung des Spannungsverlaufs an der kapazitiven Last beim Anschalten der kapazitiven Last an die Bordnetzspannung mit wiederholtem Zuschalten des elektronischen Schalters, ohne hartes Durchschalten nach Erreichen einer Schwellspannung;
- Fig. 3: eine schematische Darstellung einer elektronischen Stromverteileranordnung 100 gemäß einem ersten Aspekt der Offenbarung;
- Fig. 4: eine schematische Darstellung eines Ausführungsbeispiels der elektronischen Stromverteileranordnung 200 gemäß dem ersten Aspekt der Offenbarung;
- Fig. 5a: eine schematische Darstellung des Stromverlaufs 500a an der kapazitiven Last bei einem erfolgreichen Aufschalten der kapazitiven Last über die elektronische Stromverteileranordnung 200 ohne Kurzschluss im Lastzweig;
- Fig. 5b: eine schematische Darstellung des Spannungsverlaufs 500b an der kapazitiven Last bei einem erfolgreichen Aufschalten der kapazitiven Last über die elektronische Stromverteileranordnung 200 ohne Kurzschluss im Lastzweig;
- Fig. 6a: eine schematische Darstellung des Stromverlaufs 600a an der kapazitiven Last bei einem Aufschalten der kapazitiven Last über die elektronische Stromverteileranordnung 200 für einen Kurzschluss im Lastzweig;
- Fig. 6b: eine schematische Darstellung des Spannungsverlaufs 600b an der kapazitiven Last bei einem Aufschalten der kapazitiven Last über die elektronische Stromverteileranordnung 200 für einen Kurzschluss im Lastzweig;
- Fig. 7: eine schematische Darstellung einer elektronischen Stromverteileranordnung 700 gemäß einem zweiten Aspekt der Offenbarung;
- Fig. 8: eine schematische Darstellung eines Verfahrens 800 zur Absicherung einer kapazitiven Last gemäß einem dritten Aspekt der Offenbarung; und
- Fig. 9: eine schematische Darstellung eines Verfahrens 900 zur Absicherung einer kapazitiven Last gemäß einem vierten Aspekt der Offenbarung.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

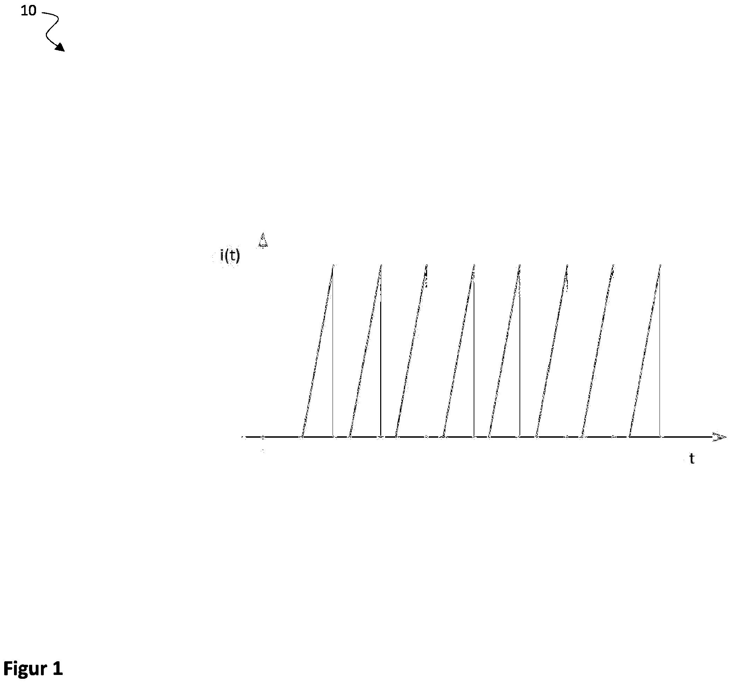

Fig. 1 zeigt eine schematische Darstellung des Stromverlaufs 10 beim Anschalten einer kapazitiven Last an die Bordnetzspannung mit wiederholtem Zuschalten des elektronischen Schalters.

Der Stromverlauf 10 zeigt eine Anzahl von aufeinanderfolgenden Stromrampen über der Zeit. In diesem Beispiel sind acht aufeinanderfolgende Stromrampen dargestellt. **Die Anzahl kann auch typischerweise bei mehreren hundert oder tausend liegen.**

Beim Stromeinschaltvorgang, auch "Inrush" genannt, bei dem die Last an die Bordnetzspannung geschaltet wird, wird nach erfolgter Abschaltung über die schnelle Kurzschlussabschaltung sofort wieder aufgeschaltet. Mit jedem Schaltvorgang wird eine Teilladungsmenge auf die Kapazität der Last geladen. So steigt die Spannung über dem Kondensator der Last langsam an.

Smart-FETs haben typischerweise solch einen Mechanismus, bei dem durch stetiges WiederAufschalten in die kapazitive Last die Kapazität der Last stufenweise geladen wird.

Der in Figur 1 dargestellte Stromanstieg i(t) in der kapazitiven Last wird durch die Induktivität der Leitungen begrenzt. Wird die Abschaltschwelle des MOSFET-Treibers erreicht, so schaltet der MOSFET ab. Daraufhin erfolgt ein sofortiges Wiederaufschalten. Mit jedem i(t) Dreieck wird Ladung auf die Kapazität gebracht, und die Spannung steigt in Stufen.

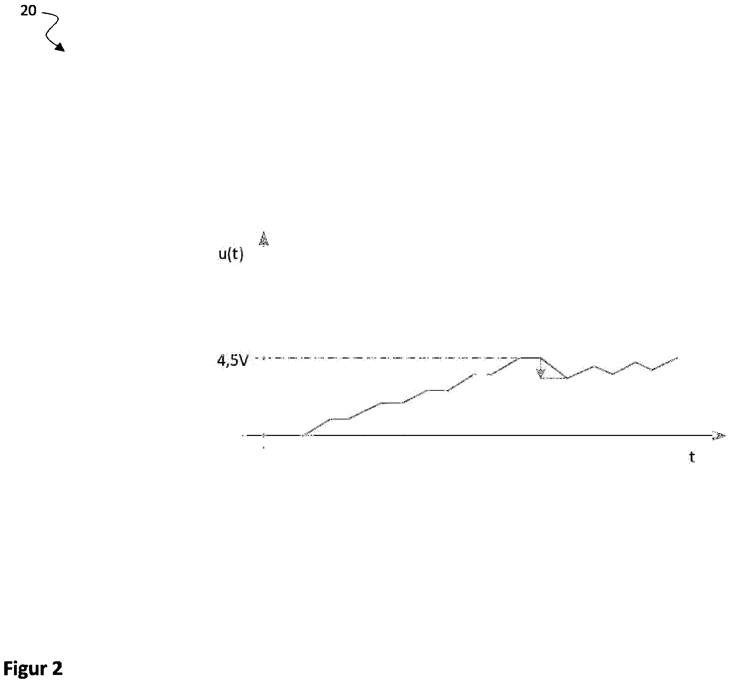

Fig. 2 zeigt eine schematische Darstellung des Spannungsverlaufs 20 an der kapazitiven Last beim Anschalten der kapazitiven Last an die Bordnetzspannung mit wiederholtem Zuschalten des elektronischen Schalters, ohne hartes Durchschalten nach Erreichen einer Schwellspannung.

In Figur 2 ist dargestellt, wie die Spannung u(t) an der kapazitiven Last mit jedem Aufschalten, wie oben in Figur 1 dargestellt, ansteigt. Bei circa 4,5V bis 5,5V fängt der µController der Last an hochzufahren, da die Start-Spannung des Spannungsreglers überschritten wird. In diesem Moment wird die Kapazität aber durch den µController und die Last selbst belastet. In der Konsequenz sinkt die Spannung der Kapazität. Diese kann wieder unter die Einsatzspannung des Reglers fallen. Es kann also je nach Verhalten der Last ein instabiler Aufstart der Last samt µController erfolgen. Der instabile Aufstart (Brown-In) kann zu einem nicht spezifizierten Verhalten der Last führen und somit zu schwer zu identifizierenden Fehlern, die zudem auch nur sporadisch auftreten können.

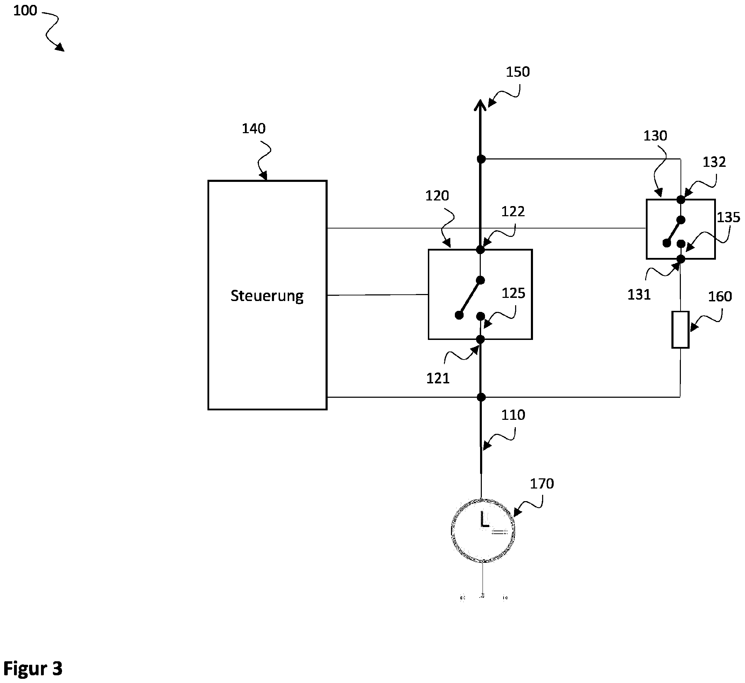

Fig. 3 zeigt eine schematische Darstellung einer elektronischen Stromverteileranordnung 100 gemäß einem ersten Aspekt der Offenbarung.

Die elektronische Stromverteileranordnung 100 dient zum Absichern einer kapazitiven Last 170. Die elektronische Stromverteileranordnung 100 umfasst eine elektrische Leitung 110 zur Stromversorgung der kapazitiven Last 170; einen ersten elektronischen Schalter 120 zur Absicherung der kapazitiven Last 170; einen zweiten elektronischen Schalter 130 zum Vorladen der kapazitiven Last 170; einen Widerstand 160 und eine Steuerung 140.

Der erste elektronische Schalter 120 weist einen ersten schaltbaren Strompfad 125 auf zwischen einem ersten Lastanschluss 121 und einem zweiten Lastanschluss 122 des ersten elektronischen Schalters 120. Die elektrische Leitung 110 ist an den ersten Lastanschluss 121 des ersten elektronischen Schalters 120 angeschlossen. Der zweite Lastanschluss 122 des ersten elektronischen Schalters 120 ist an eine Stromversorgung 150, z.B. das Bordnetz eines elektrifizierten Fahrzeugs anschließbar, um die kapazitive Last 170 mit Strom zu versorgen.

Der zweite elektronische Schalter 130 dient zum Vorladen der kapazitiven Last 170 vor einem Durchschalten des ersten elektronischen Schalters 120. Der zweite elektronische Schalter 130 weist einen zweiten schaltbaren Strompfad 135 auf zwischen einem ersten Lastanschluss 131 und einem zweiten Lastanschluss 132 des zweiten elektronischen Schalters 130.

Der Widerstand 160 ist zu dem zweiten schaltbaren Strompfad 135 des zweiten elektronischen Schalters 130 in Serie geschaltet. Die Serienschaltung des Widerstands 160 mit dem zweiten elektronischen Schalter 130 ist parallel geschaltet zu dem ersten schaltbaren Strompfad 125 des ersten elektronischen Schalters 120.

Die Steuerung 140 dient zum Steuern des ersten elektronischen Schalters 120 und des zweiten elektronischen Schalters 130.

Die Steuerung 140 ist ausgebildet, vor dem Durchschalten des ersten elektronischen Schalters 120 zur Stromversorgung der kapazitiven Last 170 den zweiten elektronischen Schalter 130 einzuschalten, um die kapazitive Last 170 vorzuladen und den ersten elektronischen Schalter 120 erst dann durchzuschalten, wenn eine Spannung an dem Widerstand 160 einen Schwellwert erreicht.

Die Steuerung 140 ist beispielsweise ausgebildet, die kapazitive Last 170 über einen elektrischen Bypass-Pfad von der Stromversorgung 150 über den zweiten schaltbaren Strompfad 135 des zweiten elektronischen Schalters 130 und den Widerstand 160 zu der kapazitiven Last 170 vorzuladen.

Der Schwellwert der Spannung an dem Widerstand 160 liegt beispielsweise oberhalb einer Spannung, die sich bei einem Kurzschluss der kapazitiven Last 170 an dem Widerstand 160 einstellt.

Die Steuerung 140 ist beispielsweise ausgebildet, beim Durchschalten des ersten elektronischen Schalters 120 eine Kurzschlussabschaltung des ersten elektronischen Schalters 120 auszuschalten.

Die Kurzschlussabschaltung des ersten elektronischen Schalters 120 ist beispielsweise in der Steuerung 140 implementiert und kann beispielsweise ausgebildet sein, den ersten elektronischen Schalter 120 abzuschalten, wenn ein Strom durch den ersten schaltbaren Strompfad 125 des ersten elektronischen Schalters 120 einen Abschaltschwellwert erreicht, beispielsweise entsprechend den oben zu den Figuren 1 und 2 dargestellten Strom- und Spannungsverläufen.

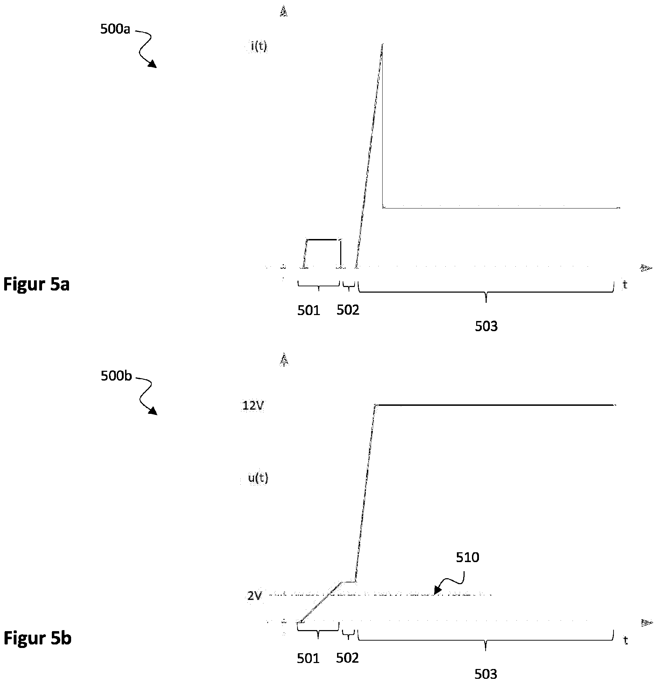

Die Steuerung 140 kann ausgebildet sein, beim Durchschalten des ersten elektronischen Schalters 120 einen Stromfluss durch den ersten schaltbaren Strompfad 125 zuzulassen, der oberhalb des Abschaltschwellwerts liegt, wie beispielsweise in Figur 5a dargestellt.

Die Steuerung 140 kann ausgebildet sein, die Spannung an dem Widerstand 160 nach Ablauf einer vorbestimmten Zeit ab dem Einschalten des zweiten elektronischen Schalters 130 zu erfassen.

Die Steuerung 140 kann ausgebildet sein, den ersten elektronischen Schalter 120 im abgeschalteten Zustand zu halten, wenn die Spannung an dem Widerstand 160 nach Ablauf der vorbestimmten Zeit unterhalb des Schwellwerts der Spannung verbleibt.

Der Schwellwert der Spannung kann beispielsweise unterhalb einer Aufstart-Spannung eines Spannungsreglers der kapazitiven Last 170 liegen.

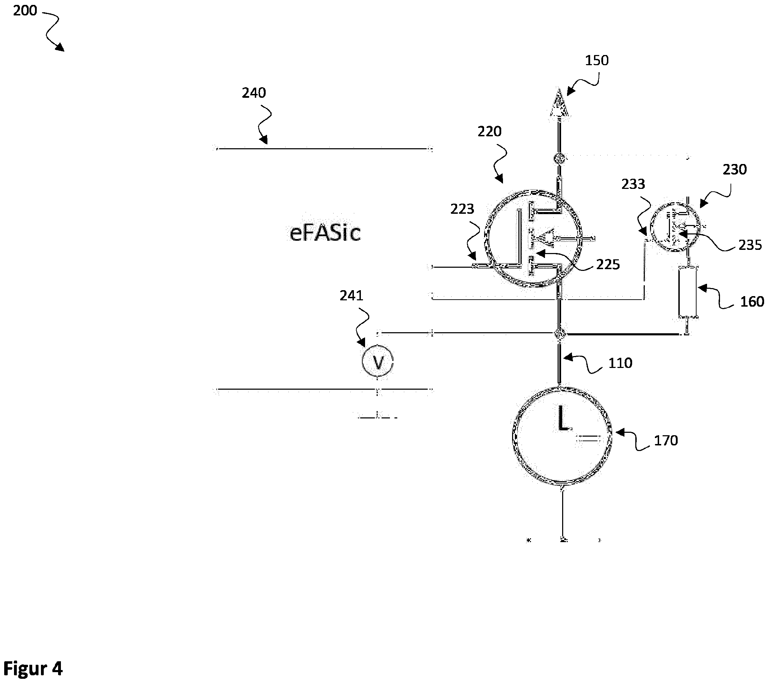

In einer Ausführungsform der elektronischen Stromverteileranordnung 100, die in Figur 4 näher dargestellt ist, umfasst der erste elektronische Schalter 120 und/oder der zweite elektronische Schalter 130 einen MOSFET Transistor 220, 230.

In einer Ausführungsform der elektronischen Stromverteileranordnung 100, die in Figur 4 näher dargestellt ist, umfasst die Steuerung 140 einen anwendungsspezifischen integrierten Schaltkreis (ASIC), beispielsweise einen elektrischen Sicherungs-ASIC, hier auch als eFASic 240 bezeichnet.

Die Steuerung 140 ist beispielsweise ausgebildet, ein Aufschalten einer Bordnetzspannung auf die kapazitive Last 170 basierend auf einer Ansteuerung des ersten elektronischen Schalters 120 und des zweiten elektronischen Schalters 130 zu steuern.

Fig. 4 zeigt eine schematische Darstellung eines Ausführungsbeispiels der elektronischen Stromverteileranordnung 200 gemäß dem ersten Aspekt der Offenbarung.

Die elektronische Stromverteileranordnung 200 dient zum Absichern einer kapazitiven Last 170. Die elektronische Stromverteileranordnung 100 umfasst eine elektrische Leitung 110 zur Stromversorgung der kapazitiven Last 170; einen ersten elektronischen Schalter 120 zur Absicherung der kapazitiven Last 170, der in dieser Ausführungsform als ein erster MOSFET 220 realisiert ist; einen zweiten elektronischen Schalter 130 zum Vorladen der kapazitiven Last 170, der in dieser Ausführungsform als ein zweiter MOSFET 230 realisiert ist; einen Widerstand 160 und eine Steuerung 140.

Der erste elektronische Schalter 120 weist einen ersten schaltbaren Strompfad 225 auf, z.B. n-Kanal oder p-Kanal des ersten MOSFET, zwischen einem ersten Lastanschluss 121, z.B. Drain oder Source, und einem zweiten Lastanschluss 122, z.B. Source oder Drain des ersten MOSFET 220. Die elektrische Leitung 110 ist an den ersten Lastanschluss 121 des ersten MOSFETs 220 angeschlossen. Der zweite Lastanschluss 122 des ersten MOSFETs 220 ist an eine Stromversorgung 150, z.B. das Bordnetz eines elektrifizierten Fahrzeugs anschließbar, um die kapazitive Last 170 mit Strom zu versorgen.

Der zweite MOSFET 230 dient zum Vorladen der kapazitiven Last 170 vor einem Durchschalten des ersten MOSFETs 220. Der zweite MOSFET 230 weist einen zweiten schaltbaren Strompfad 235, z.B. n-Kanal oder p-Kanal des zweiten MOSFET 230, auf zwischen einem ersten Lastanschluss 131, z.B. Drain oder Source und einem zweiten Lastanschluss 132, z.B. Source oder Drain des zweiten MOSFETs 230.

Der Widerstand 160 ist zu dem zweiten schaltbaren Strompfad 235 des zweiten MOSFETs 230 in Serie geschaltet. Die Serienschaltung des Widerstands 160 mit dem zweiten MOSFET 230 ist parallel geschaltet zu dem ersten schaltbaren Strompfad 125 des ersten MOSFETs 220.

Die Steuerung 140 dient zum Steuern des ersten MOSFETs 220 und des zweiten MOSFETs 230.

Die Steuerung 140 ist ausgebildet, vor dem Durchschalten des ersten MOSFETs 220 zur Stromversorgung der kapazitiven Last 170 den zweiten MOSFET 230 einzuschalten, um die kapazitive Last 170 vorzuladen und den ersten MOSFET 220 erst dann durchzuschalten, wenn eine Spannung an dem Widerstand 160 einen Schwellwert erreicht.

In diesem Ausführungsbeispiel umfasst die Steuerung einen EFASic 242, d.h. einen Electronic Fuse ASIC Baustein, also einen ASIC (applikationsspezifischer integrierter Schaltkreis), der eine elektronische Sicherung implementiert. Der EFASic 242 kann den ersten MOSFET 220 und den zweiten MOSFET 230 entsprechend ansteuern.

Fig. 5a zeigt eine schematische Darstellung des Stromverlaufs 500a an der kapazitiven Last bei einem erfolgreichen Aufschalten der kapazitiven Last über die elektronische Stromverteileranordnung 200 ohne Kurzschluss im Lastzweig.

In der Darstellung der Figur 5a fließt für einen kurzen Testzeitraum 501, z.B. 2ms ein über einen Widerstand 160 von z.B. 1,50hm begrenzter Strom zur kapazitiven Last 170 (siehe Figur 4). Die thermische Belastung des Widerstands bleibt gering, wegen des nur kurzen Aufschaltens. Auch der Vorschaltwiderstand des Transistors 230 kann entsprechend klein ausgewählt werden, z.B. Rdson = 10mOhm. Nach diesem Testzeitraum 501 von z.B. 2ms kann die Spannung an der Last 170 über den Treiber 241 des eFASic 240 gemessen werden. Die Messzeit 502 bzw. der Messzeitraum 502 zur Messung der Spannung an der Last ist im Stromverlauf 500a dargestellt. Liegt diese Spannung über 0V, so liegt kein Kurzschluss der Last oder des Lastkreises vor. Die Spannungsschwelle 510, die dabei erreicht werden soll, sollte so gewählt werden, dass sie unterhalb der Aufstart-Spannung der Spannungsregler der Last 170 liegt, z.B. 2V, wie im Spannungsverlauf 500b dargestellt. Wird diese Spannungsschwelle 510 von z.B. 2V erreicht, so wird die schnelle Kurzschlussabschaltung des Treibers 241 deaktiviert. Danach, d.h. für die Zeit 503 bzw. Aktivierungszeit 503 wird der Schalt-MOSFET 220 vom Treiber 241 durchgesteuert.

Fig. 5b zeigt eine schematische Darstellung des Spannungsverlaufs 500b an der kapazitiven Last bei einem erfolgreichen Aufschalten der kapazitiven Last 170 über die elektronische Stromverteileranordnung 200 ohne Kurzschluss im Lastzweig. Der Spannungsverlauf 500b und der zugehörige Stromverlauf 500a zeigen das Verhalten bei der beschriebenen Inrush-Steuerung für ein erfolgreiches Aufschalten ohne Kurzschluss im Lastzweig. Durch den Bypass Zweig über den Transistor 230 und Widerstand 160 (siehe Figur 4) kann die Kapazität der Last 170 auf einen Wert entsprechend einer Spannung oberhalb der Spannungsschwelle 510 von z.B. 2V geladen werden, da kein Kurzschluss vorliegt, welcher ein solches Aufladen der Last 170 verhindern würde. Damit kann die schnelle Überstromabschaltung durch die Steuerung 240 deaktiviert werden und die Steuerung 240 kann ein hartes Aufschalten ermöglichen. Im Stromverlauf 500a steigt der Inrush-Strom bzw. Aufschaltstrom auf einen hohen Wert, der sonst von der Überstromabschaltung verhindert worden wäre und die Spannung steigt schnell bis auf die Bordnetzspannung von z.B. 12V an, wie im Spannungsverlauf 500b dargestellt.

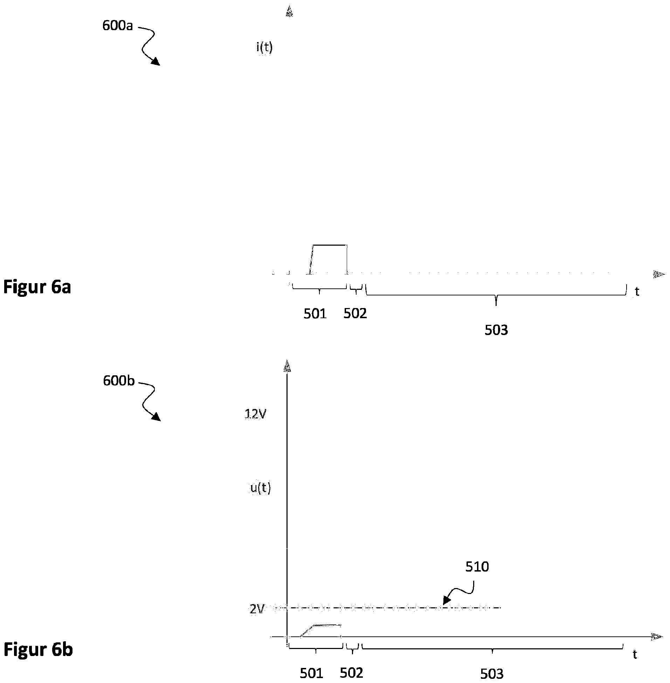

Fig. 6a zeigt eine schematische Darstellung des Stromverlaufs 600a an der kapazitiven Last bei einem Aufschalten der kapazitiven Last über die elektronische Stromverteileranordnung 200 für einen Kurzschluss im Lastzweig oder unerlaubt niedriger Impedanz des Lastzweiges.

Wie bereits oben zur Figur 4a beschrieben, fließt für einen kurzen Testzeitraum 501, z.B. 2ms ein über den Widerstand 160 von z.B. 1,50hm begrenzter Strom zur kapazitiven Last 170 (siehe Figur 4). Nach diesem Testzeitraum 501 von z.B. 2ms kann die Spannung an der Last 170 über den Treiber 241 des eFASic 240 gemessen werden. Die Messzeit 502 zur Messung der Spannung an der Last ist im Stromverlauf 500a dargestellt. Liegt diese Spannung unterhalb der zuvor beschriebenen Spannungsschwelle 510 von z.B. 2V, wie im Spannungsverlauf 600b dargestellt, so erkennt die Steuerung 240 einen Kurzschluss im Lastzweig oder eine unerlaubt niedrige Impedanz des Lastzweiges. Damit wird die schnelle Kurzschlussabschaltung des Treibers 241 nicht deaktiviert, sondern bleibt eingeschaltet und im folgenden Zeitintervall 503 bzw. die Aktivierungszeit 503 wird der Schalt-MOSFET 220 vom Treiber 241 nicht durchgesteuert, sondern bleibt im sperrenden Zustand. Da sich keine Spannung im Lastzweig aufbaut durch die Bypass Ladung, wird der Schalttransistor 220 nicht hart durchgeschaltet.

Fig. 6b zeigt eine schematische Darstellung des Spannungsverlaufs 600b an der kapazitiven Last bei einem Aufschalten der kapazitiven Last über die elektronische Stromverteileranordnung 200 für einen Kurzschluss im Lastzweig oder unerlaubt niedriger Impedanz des Lastzweiges.

Der Spannungsverlauf 600b und der zugehörige Stromverlauf 600a zeigen das Verhalten bei der beschriebenen Inrush-Steuerung für einen Kurzschluss im Lastzweig oder eine unerlaubt niedrige Impedanz des Lastzweiges. Durch den Bypass Zweig über den Transistor 230 und Widerstand 160 (siehe Figur 4) kann die Kapazität der Last 170 auf einen Wert entsprechend einer Spannung oberhalb der Spannungsschwelle 510 von z.B. 2V geladen werden. Da allerdings ein Kurzschluss vorliegt, wird ein solches Aufladen der Last 170 verhindert. Damit bleibt die schnelle Überstromabschaltung durch die Steuerung 240 aktiviert und ein hartes Aufschalten wird verhindert, was aufgrund des Kurzschlusses zu einem instabilen Zustand führen würde. Im Stromverlauf 600a bleibt der Strom im folgenden Zeitintervall 510 bei Null, ebenso die Spannung in der Darstellung des Spannungsverlaufs 600b.

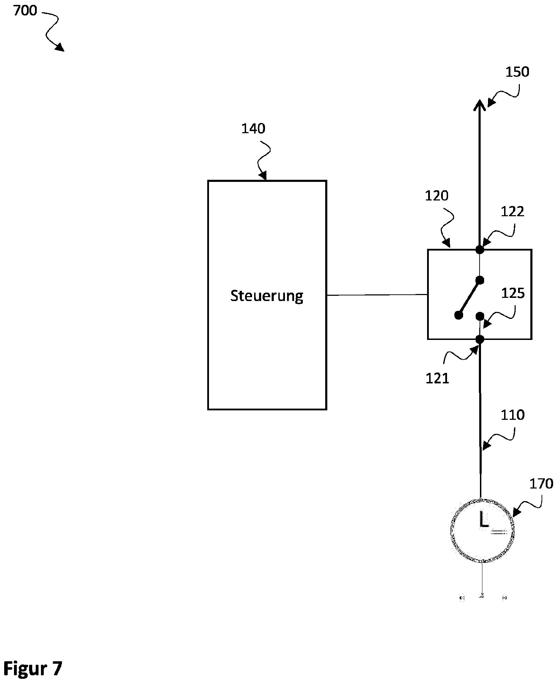

Fig. 7 zeigt eine schematische Darstellung einer elektronischen Stromverteileranordnung 700 gemäß einem zweiten Aspekt der Offenbarung.

Die elektronische Stromverteileranordnung 700 dient zum Absichern einer kapazitiven Last 170 und umfasst eine elektrische Leitung 110 zur Stromversorgung der kapazitiven Last 170; einen elektronischen Schalter 120 zur Absicherung der kapazitiven Last 170 und eine Steuerung 140 zum Steuern des elektronischen Schalters 120.

Der elektronische Schalter 120 weist einen schaltbaren Strompfad 125 zwischen einem ersten Lastanschluss 121 und einem zweiten Lastanschluss 122 auf. Die elektrische Leitung 110 ist an den ersten Lastanschluss 121 angeschlossen und der zweite Lastanschluss 122 ist an eine Stromversorgung 150 anschließbar, um die kapazitive Last 170 mit Strom zu versorgen.

Die Steuerung 140 weist eine Kurzschlussabschaltung auf, die ausgebildet ist, den elektronischen Schalter 120 abzuschalten, wenn ein Strom durch den schaltbaren Strompfad 125 des elektronischen Schalters 120 einen Abschaltschwellwert erreicht. Die Steuerung 140 ist ferner ausgebildet, den elektronischen Schalter 120 nach dem Abschalten wieder einzuschalten, und damit die kapazitive Last 170 stufenweise aufzuladen, beispielsweise entsprechend der Darstellung des Spannungsverlaufs in Figur 2.

Die Steuerung 140 ist ausgebildet, eine Spannung an der kapazitiven Last 170 zu erfassen und den elektronischen Schalter 120 durchzuschalten, wenn die erfasste Spannung an der kapazitiven Last 170 einen Schwellwert erreicht.

Die Steuerung 140 kann ausgebildet sein, den elektronischen Schalter 120 nach einer vorgegebenen Zeit nach dem Erreichen des Abschaltschwellwerts des elektronischen Schalters 120 wieder einzuschalten, um damit das stufenweise Aufladen der Last 170 zu ermöglichen.

Der Schwellwert der Spannung an der kapazitiven Last 170 kann so gewählt werden, dass er oberhalb einer Spannung an der kapazitiven Last 170 liegt, die sich bei einem Kurzschluss an der kapazitiven Last 170 einstellt.

Die Steuerung 140 kann ausgebildet sein, beim Durchschalten des elektronischen Schalters 120 die Kurzschlussabschaltung des elektronischen Schalters 120 auszuschalten.

Das Verhalten des Spannungsverlaufs an der kapazitiven Last ist in Figur 2 dargestellt. Die Spannung an der kapazitiven Last 170 wird stufenweise aufgeladen bis ein Schwellwert von beispielsweise 2V erreicht wird, wie oben zu den Figuren 5a, 5b, 6a, 6b beschrieben. Wird dieser Schwellwert in einem darauffolgenden Messintervall gehalten, so wird erkannt, dass die kapazitive Last nicht kurzgeschlossen ist. In diesem Fall kann die Kurzschlussabschaltung deaktiviert werden und die Steuerung 140 kann ein hartes Aufschalten ermöglichen, wie oben zu den Figuren 5a, 5b, 6a, 6b beschrieben.

Kann dieser Schwellwert in dem darauffolgenden Messintervall allerdings nicht gehalten werden, so wird erkannt, dass die kapazitive Last kurzgeschlossen ist. In diesem Fall bleibt die Kurzschlussabschaltung aktiviert und die Steuerung 140 verhindert ein Aufschalten der kurzgeschlossenen kapazitiven Last und damit Instabilitäten im Spannungs- und Stromverlauf.

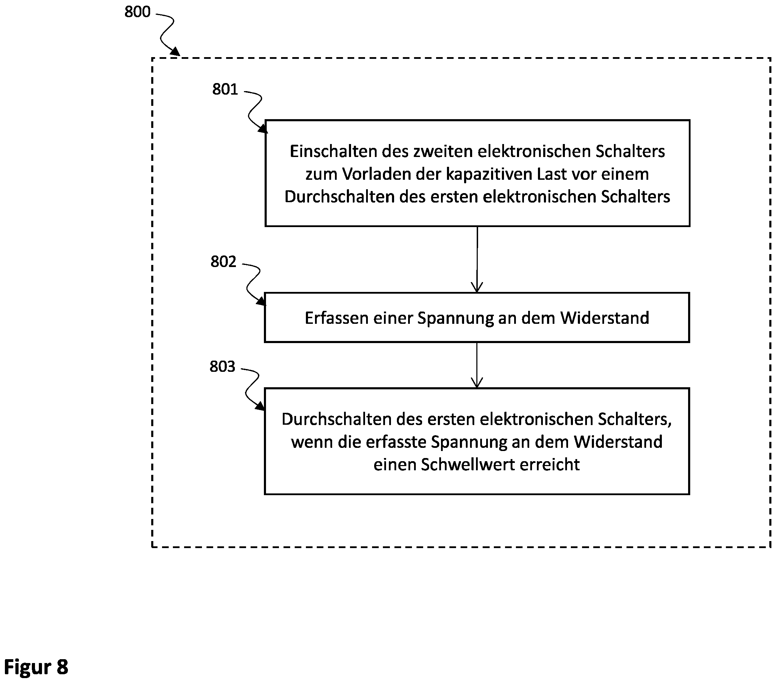

Fig. 8 zeigt eine schematische Darstellung eines Verfahrens 800 zur Absicherung einer kapazitiven Last gemäß einem dritten Aspekt der Offenbarung.

Das Verfahren 800 dient zum Absichern einer kapazitiven Last 170, die über eine elektrische Leitung 110 an eine elektronische Stromverteileranordnung 100 angeschlossen ist, wie oben zu den Figuren 3 und 4 beschrieben. Eine solche elektronische Stromverteileranordnung 100 weist Folgendes auf: einen ersten elektronischen Schalter 120 mit einem ersten schaltbaren Strompfad zwischen einem ersten Lastanschluss und einem zweiten Lastanschluss des ersten elektronischen Schalters, wobei die elektrische Leitung an den ersten Anschluss des ersten elektronischen Schalters angeschlossen ist, und wobei der zweite Anschluss des ersten elektronischen Schalters an eine Stromversorgung 150 angeschlossen ist, um die kapazitive Last 170 mit Strom zu versorgen; einen zweiten elektronischen Schalter 130 mit einem zweiten schaltbaren Strompfad zwischen einem ersten Lastanschluss und einem zweiten Lastanschluss des zweiten elektronischen Schalters; einen Widerstand 160, der zu dem zweiten schaltbaren Strompfad 135 des zweiten elektronischen Schalters 130 in Serie geschaltet ist, wobei die Serienschaltung des Widerstands 160 mit dem zweiten elektronischen Schalter 130 parallel geschaltet ist zu dem ersten schaltbaren Strompfad 125 des ersten elektronischen Schalters 120.

Das Verfahren 800 umfasst die folgenden Schritte: Einschalten 801 des zweiten elektronischen Schalters 130 zum Vorladen der kapazitiven Last 120 vor einem Durchschalten des ersten elektronischen Schalters 120, wie beispielsweise oben zu den Figuren 3 und 4 beschrieben; Erfassen 802 einer Spannung an dem Widerstand, wie beispielsweise oben zu den Figuren 3 und 4 beschrieben; und Durchschalten 803 des ersten elektronischen Schalters 120, wenn die erfasste Spannung an dem Widerstand einen Schwellwert erreicht, wie beispielsweise oben zu den Figuren 3 und 4 beschrieben.

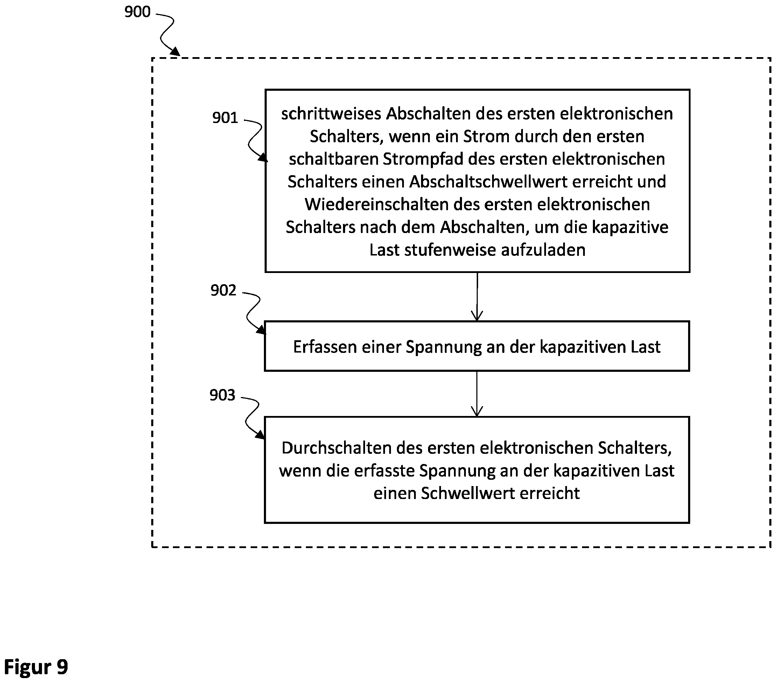

Fig. 9 zeigt eine schematische Darstellung eines Verfahrens 900 zur Absicherung einer kapazitiven Last gemäß einem vierten Aspekt der Offenbarung.

Das Verfahren 900 dient zum Absichern einer kapazitiven Last 170, die über eine elektrische Leitung 110 an eine elektronische Stromverteileranordnung 700 angeschlossen ist, wie beispielsweise oben zu Figur 7 beschrieben. Diese elektronische Stromverteileranordnung 700 weist Folgendes auf: einen elektronischen Schalter 120 mit einem schaltbaren Strompfad 125 zwischen einem ersten Lastanschluss und einem zweiten Lastanschluss, wobei die elektrische Leitung an den ersten Lastanschluss angeschlossen ist, und wobei der zweite Lastanschluss an die Stromversorgung angeschlossen ist, um die kapazitive Last 170 mit Strom zu versorgen, wie oben zu Figur 7 beschreiben.

Das Verfahren 900 umfasst folgende Schritte: schrittweises Abschalten 901 des ersten elektronischen Schalters, wenn ein Strom durch den schaltbaren Strompfad des elektronischen Schalters einen Abschaltschwellwert erreicht und Wiedereinschalten des elektronischen Schalters nach dem Abschalten, um die kapazitive Last stufenweise aufzuladen, wie beispielsweise oben zu Figur 7 beschrieben; Erfassen 902 einer Spannung an der kapazitiven Last, wie beispielsweise oben zu Figur 7 beschrieben; und Durchschalten 903 des elektronischen Schalters, wenn die erfasste Spannung an der kapazitiven Last einen Schwellwert erreicht, wie beispielsweise oben zu Figur 7 beschrieben.

Ferner kann ein Computerprogramm mit einem Programmcode zum Ausführen der Verfahren 800, 900 in einer Steuerung, z.B. einer Steuerung 140 einer elektronischen Stromverteileranordnung 100, 200, 700 wie oben zu den Figuren 3, 4 und 7 beschrieben, bereitgestellt werden.

### Bezugszeichenliste

- 10: Stromverlauf beim Anschalten einer kapazitiven Last an die Bordnetzspannung
- 20: Spannungsverlauf beim Anschalten der kapazitiven Last an die Bordnetzspannung

- 100: elektronische Stromverteileranordnung zum Absichern einer kapazitiven Last gemäß einem ersten Aspekt
- 110: elektrische Leitung
- 120: erster elektronischer Schalter
- 121: erster Lastanschluss des ersten elektronischen Schalters
- 122: zweiter Lastanschluss des ersten elektronischen Schalters
- 125: schaltbarer Strompfad des ersten elektronischen Schalters
- 130: zweiter elektronischer Schalter
- 131: erster Lastanschluss des zweiten elektronischen Schalters
- 132: zweiter Lastanschluss des zweiten elektronischen Schalters
- 135: schaltbarer Strompfad des zweiten elektronischen Schalters
- 140: Steuerung
- 150: Stromversorgung
- 160: Widerstand
- 170: kapazitive Last

- 200: elektronische Stromverteileranordnung zum Absichern einer kapazitiven Last gemäß einem Ausführungsbeispiel des ersten Aspekts

- 240: EFASic, Electronic Fuse ASIC
- 241: Treiber im EFASic zur Messung der Spannung an der Last
- 220: erster MOSFET Transistor
- 225: schaltbarer Strompfad des ersten MOSFET, z.B. n-Kanal oder p-Kanal
- 223: Steueranschluss des ersten MOSFET, z.B. Gate-Elektrode
- 230: zweiter MOSFET Transistor
- 235: schaltbarer Strompfad des zweiten MOSFET, z.B. n-Kanal oder p-Kanal
- 233: Steueranschluss des zweiten MOSFET, z.B. Gate-Elektrode
- 500a: Stromverlauf an der kapazitiven Last bei erfolgreichem Aufschalten ohne Kurzschluss
- 500b: Spannungsverlauf an der kapazitiven Last bei erfolgreichem Aufschalten ohne Kurzschluss
- 501: Testzeitraum
- 502: Messzeit bzw. Messzeitraum zur Messung der Spannung an der Last
- 503: Aktivierungszeit
- 510: Spannungsschwelle

- 600a: Stromverlauf an der kapazitiven Last bei Kurzschluss im Lastpfad
- 600b: Spannungsverlauf an der kapazitiven Last bei Kurzschluss im Lastpfad

- 700: elektronische Stromverteileranordnung zum Absichern einer kapazitiven Last gemäß einem zweiten Aspekt

- 800: Verfahren zum Absichern einer kapazitiven Last gemäß dem ersten Aspekt
- 801: 1. Verfahrensschritt
- 802: 2. Verfahrensschritt
- 803: 3. Verfahrensschritt

- 900: Verfahren zum Absichern einer kapazitiven Last gemäß dem zweiten Aspekt
- 901: 1. Verfahrensschritt
- 902: 2. Verfahrensschritt
- 903: 3. Verfahrensschritt

## Patentansprüche

1. Elektronische Stromverteileranordnung (100) zum Absichern einer kapazitiven Last (170), mit:
einer elektrischen Leitung (110) zur Stromversorgung einer kapazitiven Last (170);
einem ersten elektronischen Schalter (120) zur Absicherung der kapazitiven Last (170), wobei der erste elektronische Schalter (120) einen ersten schaltbaren Strompfad (125) zwischen einem ersten Lastanschluss (121) und einem zweiten Lastanschluss (122) des ersten elektronischen Schalters (120) aufweist, und die elektrische Leitung (110) an den ersten Lastanschluss (121) des ersten elektronischen Schalters (120) angeschlossen ist, und der zweite Lastanschluss (122) des ersten elektronischen Schalters (120) an eine Stromversorgung (150) anschließbar ist, um die kapazitive Last (170) mit Strom zu versorgen;
einem zweiten elektronischen Schalter (130) zum Vorladen der kapazitiven Last (170) vor einem Durchschalten des ersten elektronischen Schalters (120), wobei der zweite elektronische Schalter (130) einen zweiten schaltbaren Strompfad (135) zwischen einem ersten Lastanschluss (131) und einem zweiten Lastanschluss (132) des zweiten elektronischen Schalters (130) aufweist,
einem Widerstand (160), der zu dem zweiten schaltbaren Strompfad (135) des zweiten elektronischen Schalters (130) in Serie geschaltet ist,
wobei die Serienschaltung des Widerstands (160) mit dem zweiten elektronischen Schalter (130) parallel geschaltet ist zu dem ersten schaltbaren Strompfad (125) des ersten elektronischen Schalters (120); und
einer Steuerung (140) zum Steuern des ersten elektronischen Schalters (120) und des zweiten elektronischen Schalters (130),
wobei die Steuerung (140) ausgebildet ist, vor dem Durchschalten des ersten elektronischen Schalters (120) zur Stromversorgung der kapazitiven Last (170) den zweiten elektronischen Schalter (130) einzuschalten, um die kapazitive Last (170) vorzuladen und den ersten elektronischen Schalter (120) erst dann durchzuschalten, wenn eine Spannung an dem Widerstand (160) einen Schwellwert erreicht.

2. Elektronische Stromverteileranordnung (100) nach Anspruch 1,
wobei die Steuerung (140) ausgebildet ist, die kapazitive Last (170) über einen elektrischen Bypass-Pfad von der Stromversorgung (150) über den zweiten schaltbaren Strompfad (135) des zweiten elektronischen Schalters (130) und den Widerstand (160) zu der kapazitiven Last (170) vorzuladen.

3. Elektronische Stromverteileranordnung (100) nach Anspruch 1 oder 2,
wobei der Schwellwert der Spannung an dem Widerstand (160) oberhalb einer Spannung liegt, die sich bei einem Kurzschluss der kapazitiven Last (170) an dem Widerstand (160) einstellt.

4. Elektronische Stromverteileranordnung (100) nach einem der vorstehenden Ansprüche,
wobei die Steuerung (140) ausgebildet ist, beim Durchschalten des ersten elektronischen Schalters (120) eine Kurzschlussabschaltung des ersten elektronischen Schalters (120) auszuschalten.

5. Elektronische Stromverteileranordnung (100) nach Anspruch 4,
wobei die Kurzschlussabschaltung des ersten elektronischen Schalters (120) in der Steuerung (140) implementiert ist, und ausgebildet ist, den ersten elektronischen Schalter (120) abzuschalten, wenn ein Strom durch den ersten schaltbaren Strompfad (125) des ersten elektronischen Schalters (120) einen Abschaltschwellwert erreicht.

6. Elektronische Stromverteileranordnung (100) nach Anspruch 5,
wobei die Steuerung (140) ausgebildet ist, beim Durchschalten des ersten elektronischen Schalters (120) einen Stromfluss durch den ersten schaltbaren Strompfad (125) zuzulassen, der oberhalb des Abschaltschwellwerts liegt.

7. Elektronische Stromverteileranordnung (100) nach einem der vorstehenden Ansprüche,
wobei die Steuerung (140) ausgebildet ist, die Spannung an dem Widerstand (160) nach Ablauf einer vorbestimmten Zeit ab dem Einschalten des zweiten elektronischen Schalters (130) zu erfassen.

8. Elektronische Stromverteileranordnung (100) nach einem der vorstehenden Ansprüche,
wobei die Steuerung (140) ausgebildet ist, den ersten elektronischen Schalter (120) im abgeschalteten Zustand zu halten, wenn die Spannung an dem Widerstand (160) nach Ablauf der vorbestimmten Zeit unterhalb des Schwellwerts der Spannung verbleibt.

9. Elektronische Stromverteileranordnung (100) nach einem der vorstehenden Ansprüche,
wobei der Schwellwert der Spannung unterhalb einer Aufstart-Spannung eines Spannungsreglers der kapazitiven Last (170) liegt.

10. Elektronische Stromverteileranordnung (100, 200) nach einem der vorstehenden Ansprüche,
wobei der erste elektronische Schalter (120) und/oder der zweite elektronische Schalter (130) einen MOSFET Transistor (220, 230) umfasst.

11. Elektronische Stromverteileranordnung (100, 200) nach einem der vorstehenden Ansprüche,
wobei die Steuerung (140) einen anwendungsspezifischen integrierten Schaltkreis, ASIC, umfasst, insbesondere einen elektrischen Sicherungs-ASIC, eFASic (240).

12. Elektronische Stromverteileranordnung (100, 200) nach einem der vorstehenden Ansprüche,
wobei die Steuerung (140) ausgebildet ist, ein Aufschalten einer Bordnetzspannung auf die kapazitive Last (170) basierend auf einer Ansteuerung des ersten elektronischen Schalters (120) und des zweiten elektronischen Schalters (130) zu steuern.

13. Elektronische Stromverteileranordnung (700) zum Absichern einer kapazitiven Last (170), mit:
einer elektrischen Leitung (110) zur Stromversorgung einer kapazitiven Last (170);
einem elektronischen Schalter (120) zur Absicherung der kapazitiven Last (170), wobei der elektronische Schalter (120) einen schaltbaren Strompfad (125) zwischen einem ersten Lastanschluss (121) und einem zweiten Lastanschluss (122) aufweist, und die elektrische Leitung (110) an den ersten Lastanschluss (121) angeschlossen ist, und der zweite Lastanschluss (122) an eine Stromversorgung (150) anschließbar ist, um die kapazitive Last (170) mit Strom zu versorgen; und
einer Steuerung (140) zum Steuern des elektronischen Schalters (120),
wobei die Steuerung (140) eine Kurzschlussabschaltung aufweist, die ausgebildet ist, den elektronischen Schalter (120) abzuschalten, wenn ein Strom durch den schaltbaren Strompfad (125) des elektronischen Schalters (120) einen Abschaltschwellwert erreicht und nach dem Abschalten wieder einzuschalten, und damit die kapazitive Last (170) stufenweise aufzuladen,
wobei die Steuerung (140) ausgebildet ist, eine Spannung an der kapazitiven Last (170) zu erfassen und den elektronischen Schalter (120) durchzuschalten, wenn die erfasste Spannung an der kapazitiven Last (170) einen Schwellwert erreicht.

14. Elektronische Stromverteileranordnung (700) nach Anspruch 13,
wobei die Steuerung (140) ausgebildet ist, den elektronischen Schalter (120) nach einer vorgegebenen Zeit nach dem Erreichen des Abschaltschwellwerts des elektronischen Schalters (120) wieder einzuschalten.

15. Elektronische Stromverteileranordnung (700) nach Anspruch 13 oder 14,
wobei der Schwellwert der Spannung an der kapazitiven Last (170) oberhalb einer Spannung an der kapazitiven Last (170) liegt, die sich bei einem Kurzschluss an der kapazitiven Last (170) einstellt.

16. Elektronische Stromverteileranordnung (700) nach einem der Ansprüche 13 bis 15,
wobei die Steuerung (140) ausgebildet ist, beim Durchschalten des elektronischen Schalters (120) die Kurzschlussabschaltung des elektronischen Schalters (120) auszuschalten.

17. Verfahren (800) zum Absichern einer kapazitiven Last (170), die über eine elektrische Leitung (110) an eine elektronische Stromverteileranordnung (100) angeschlossen ist, welche Folgendes aufweist: einen ersten elektronischen Schalter (120) mit einem ersten schaltbaren Strompfad zwischen einem ersten Lastanschluss und einem zweiten Lastanschluss des ersten elektronischen Schalters aufweist, wobei die elektrische Leitung an den ersten Anschluss des ersten elektronischen Schalters angeschlossen ist, und wobei der zweite Anschluss des ersten elektronischen Schalters an eine Stromversorgung (150) angeschlossen ist, um die kapazitive Last (170) mit Strom zu versorgen; einen zweiten elektronischen Schalter (130) mit einem zweiten schaltbaren Strompfad zwischen einem ersten Lastanschluss und einem zweiten Lastanschluss des zweiten elektronischen Schalters; einen Widerstand (160), der zu dem zweiten schaltbaren Strompfad (135) des zweiten elektronischen Schalters (130) in Serie geschaltet ist, wobei die Serienschaltung des Widerstands (160) mit dem zweiten elektronischen Schalter (130) parallel geschaltet ist zu dem ersten schaltbaren Strompfad (125) des ersten elektronischen Schalters (120); wobei das Verfahren (800) folgende Schritte umfasst:
Einschalten (801) des zweiten elektronischen Schalters (130) zum Vorladen der kapazitiven Last (120) vor einem Durchschalten des ersten elektronischen Schalters (120);
Erfassen (802) einer Spannung an dem Widerstand; und
Durchschalten (803) des ersten elektronischen Schalters (120), wenn die erfasste Spannung an dem Widerstand einen Schwellwert erreicht.

18. Verfahren (900) zum Absichern einer kapazitiven Last (170), die über eine elektrische Leitung (110) an eine elektronische Stromverteileranordnung (700) angeschlossen ist, welche Folgendes aufweist: einen elektronischen Schalter (120) mit einem schaltbaren Strompfad (125) zwischen einem ersten Lastanschluss und einem zweiten Lastanschluss, wobei die elektrische Leitung an den ersten Lastanschluss angeschlossen ist, und wobei der zweite Lastanschluss an die Stromversorgung angeschlossen ist, um die kapazitive Last (170) mit Strom zu versorgen; wobei das Verfahren (900) folgende Schritte umfasst:
schrittweises Abschalten (901) des ersten elektronischen Schalters, wenn ein Strom durch den schaltbaren Strompfad des elektronischen Schalters einen Abschaltschwellwert erreicht und Wiedereinschalten des elektronischen Schalters nach dem Abschalten, um die kapazitive Last stufenweise aufzuladen;
Erfassen (902) einer Spannung an der kapazitiven Last; und
Durchschalten (903) des elektronischen Schalters, wenn die erfasste Spannung an der kapazitiven Last einen Schwellwert erreicht.
